# FASCICULE DE BREVET EUROPEEN

(11) **EP 1 333 191 B1**
(45) Date de publication et mention de la délivrance du brevet: **24.08.2005**
(21) Numéro de dépôt: 03290192.8
(22) Date de dépôt: 24.01.2003
(51) Int. Cl.: F16F 13/14

(54) **Support antivibratoire hydraulique**
Hydraulisch gedämpftes Lager
Hydraulically damped support

(30) Priorité: 01.02.2002 FR 0201219
(43) Date de publication de la demande: 06.08.2003
(73) Titulaire: HUTCHINSON, 75008 Paris (FR)
(72) Inventeur: Mellon, Paul, 28200 La Chapelle du Noyer (FR); Le Guillant, Daniel, 28200 Chateaudun (FR)
(74) Mandataire: Bérogin, Francis

(56) Documents cités:
- US-A- 5 711 513
- US-A- 6 022 006

## Description

La présente invention est relative aux supports antivibratoires hydrauliques, notamment aux supports antivibratoires hydrauliques montés entre un moteur et un châssis de véhicule automobile.

Plus particulièrement, l'invention concerne un support antivibratoire hydraulique comprenant:
- une armature interne rigide s'étendant longitudinalement le long d'un axe,
- une cage rigide comportant une paroi tubulaire et une collerette, la paroi tubulaire s'étendant entre deux extrémités axiales et entourant l'armature interne, et la collerette s'étendant radialement vers l'extérieur, à partir de la paroi tubulaire, à l'une des extrémités axiales de celle-ci,
- une armature externe cylindrique s'étendant également entre deux extrémités axiales, dans laquelle est logée la cage et comportant, à l'une de ses extrémités axiales, un épaulement et un collet, l'épaulement délimitant, avec la collerette et la paroi tubulaire, un canal étroit s'étendant selon un arc de cercle centré sur l'axe, et le collet s'étendant à partir de l'épaulement perpendiculairement à l'axe,
- un corps en élastomère, relié à l'armature interne et à la cage, tapissant au moins une partie de la surface de la paroi tubulaire et de la collerette en regard de l'armature externe, ce corps en élastomère étant conformé pour fermer le canal de manière étanche et pour former avec l'armature externe au moins deux poches communiquant entre elles par le canal, l'ensemble des poches et du canal étant rempli d'un liquide amortisseur et l'une des poches étant déformable lorsque l'armature interne et la cage subissent un déplacement radial l'une par rapport à l'autre, et
- une platine, solidaire d'au moins un élément choisi parmi la cage et l'armature externe, s'étendant perpendiculairement à l'axe et comportant des moyens de fixation du support sur une pièce extérieure à ce support.

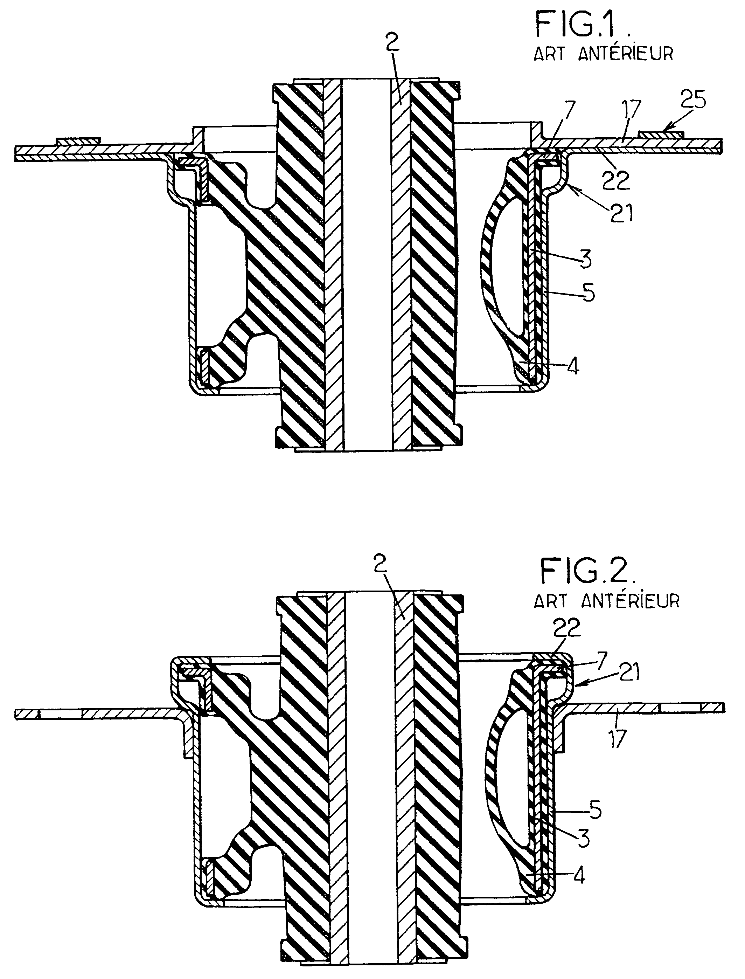

On connaît déjà des supports de ce type, dans lesquels, comme représenté sur la figure 1, la platine 17 repose sur la collerette 7 et enferme la cage 3 dans l'armature externe 5, et dans lesquels le collet 22 s'étend radialement vers l'extérieur du support, sensiblement sur la même surface que la platine 17, et est serti sur les bords de la platine 17.

On connaît également des supports tels que ceux représentés sur la figure 2, dans lesquels l'armature externe 5 comporte un collet 22 s'étendant, à partir de l'épaulement 21, vers l'armature interne 2, pour enfermer la cage 3 dans l'armature externe 5, et dans lesquels la platine 17 est soudée à la paroi externe de l'armature externe 5.

Ces supports comportent deux armatures, une cage et une platine. L'emmanchement, dans l'armature externe, de l'ensemble constitué de l'armature interne, de la cage et du corps en élastomère, ainsi que le sertissage ou le soudage de l'armature externe sur la platine, doivent être réalisées en deux opérations successives distinctes.

De tels supports présentent donc les inconvénients d'avoir un poids et un coût de fabrication relativement élevés et de devoir être montés en deux opérations, ce qui nécessite un outillage relativement complexe.

La présente invention a notamment pour but de pallier ces inconvénients.

A cet effet, selon l'invention, un support du genre en question est caractérisé par le fait que le collet s'étend radialement vers l'extérieur à partir de l'épaulement et comporte au moins une portion de surface en regard de la collerette, avec une épaisseur de corps en élastomère intercalée entre le collet et la collerette, par le fait que le collet est directement fixé à la collerette par sertissage, et par le fait qu'au moins un élément choisi parmi le collet et la collerette constitue la platine.

Grâce à ces dispositions, la platine et le collet ou la collerette ne constituent qu'une seule pièce, ce qui permet de réduire le nombre de pièces du support selon l'invention par rapport aux supports de l'art antérieur, donc d'en simplifier la fabrication en diminuant le nombre des opérations de montage. Par voie de conséquence, ceci permet réduire le coût de fabrication et le poids de ce type de support.

Dans des modes de réalisation préférés de l'invention, on peut éventuellement avoir recours en outre à l'une et/ou à l'autre des dispositions suivantes :
- l'un des éléments parmi le collet et la collerette comporte au moins un orifice de sertissage avec une fraisure formant une retenue pour une sertissure venue de matière avec l'autre de ces éléments ;
- la platine est constituée par la collerette et s'étend dans un plan sensiblement perpendiculaire à l'axe ;
- l'armature externe est réalisée dans une matière choisie parmi l'aluminium, l'acier et une matière plastique ;
- l'épaulement est réalisé par emboutissage de l'armature externe ; et
- l'épaulement est réalisé par moulage de l'armature externe.

D'autres aspects, buts et avantages de l'invention apparaîtront à la lecture de la description d'un de ses modes de réalisation.

L'invention sera également mieux comprise à l'aide des dessins, sur lesquels :
- la figure 1 représente schématiquement en coupe axiale, un support de l'art antérieur ;
- la figure 2 représente schématiquement en coupe axiale, analogue à celle de la figure 1, un autre support de l'art antérieur ;
- la figure 3 représente schématiquement, vu de dessus, un support conforme à la présente invention ;
- la figure 4 représente schématiquement en coupe axiale, analogue à celle des figures 1 et 2, le support représenté sur la figure 3 ; et
- la figure 5 représente schématiquement en coupe transversale le support représenté sur les figures 3 et 4.

Sur les différentes figures, les mêmes références désignent des éléments identiques ou similaires.

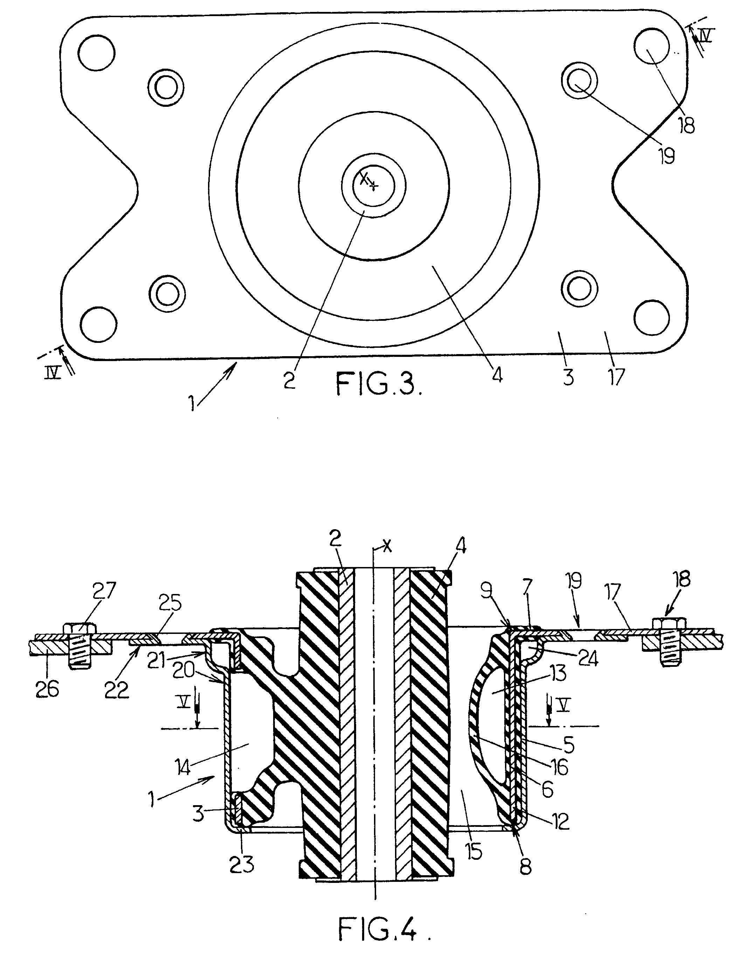

Un mode de réalisation du support 1 conforme à la présente invention est décrit ci-dessous, à titre d'exemple mais de manière non limitative, en relation avec les figures 3 à 5.

Comme représenté sur ces figures, le support 1, selon ce mode de réalisation, comporte une armature interne 2, une cage 3, un corps en élastomère 4 et une armature externe 5.

L'armature interne 2 est constituée d'un tube rigide s'étendant longitudinalement le long d'un axe de révolution X.

La cage 3 est constituée d'une tôle métallique rigide et comporte une paroi tubulaire 6 et une collerette 7.

La paroi tubulaire 6 entoure l'armature interne 2, coaxialement à cette dernière. La paroi tubulaire 6 s'étend, parallèlement à l'axe X, entre deux extrémités axiales 8 et 9.

La paroi tubulaire 6 comporte deux fenêtres 10 et 11 sensiblement diamétralement opposées à l'axe X. La présence des fenêtres 10 et 11 facilite le moulage du corps en élastomère 4 sur la cage 3.

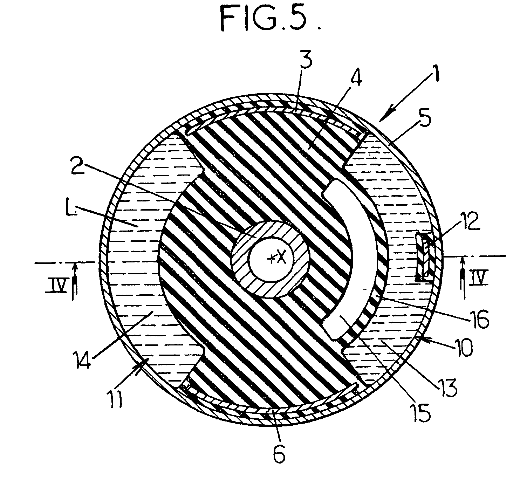

La fenêtre 10, à droite sur les figures 4 et 5, comporte un renfort 12 s'étendant, longitudinalement parallèlement à l'axe X, entre sensiblement les milieux respectifs des deux bords de la fenêtre 10 perpendiculaires à l'axe X. Ce renfort 12 fait environ 10 mm de large.

La collerette 7 s'étend radialement vers l'extérieur du support 1, à partir de l'extrémité axiale 9. L'extrémité axiale 9 est reliée continûment avec la collerette 7.

La collerette 7 se poursuit dans un plan perpendiculaire à l'axe X pour former une platine 17. La collerette 7 et la platine 17 sont en fait constituées d'une même et unique plaque. La collerette 7 correspond à la partie de cette plaque recouverte par le corps en élastomère 4 et la platine 17 correspond à la partie restante de cette plaque.

La platine 17 a sensiblement une forme rectangulaire et comporte des moyens de fixation du support 1 sur une pièce extérieure 26 à ce support 1, telle qu'un moteur. Ces moyens de fixation se matérialisant sur la platine 17 par des trous 18, destinés par exemple au passage de boulons 27.

La platine 17 est percée de quatre orifices de sertissage 19. Chaque orifice de sertissage 19 est circulaire et présente, en coupe perpendiculairement au plan de la platine 17, une fraisure de forme évasée plus largement ouverte sur la face supérieure de la platine 17, c'est-à-dire celle dirigée dans le sens correspondant à celui allant de l'extrémité axiale 8 vers l'extrémité axiale 9.

Le corps en élastomère 4 entoure l'armature interne 2 et enveloppe la paroi tubulaire 6 et la collerette 7 de la cage 3. Ce corps en élastomère 4 relie l'armature interne 2 et la cage 3 en formant deux poches 13 et 14 respectivement en regard des fenêtres 10 et 11.

La poche 13, c'est-à-dire correspondant à celle ouverte sur la fenêtre 10 comportant le renfort 12 (à droite sur la figure 4), présente une section axiale en forme de "U" ouvert radialement vers l'extérieur du support 1 et dont le sommet est séparé de l'armature interne 2 par une cavité 15 et une paroi 16.

La poche 14 présente une section axiale en forme de "U" ou de "V" ouvert radialement vers l'extérieur du support 1 et dont le sommet est lié à l'armature interne 2 par l'intermédiaire du corps en élastomère 4.

L'armature externe 5 comporte une partie cylindrique 20 de révolution autour de l'axe X, un épaulement 21 et un collet 22. L'armature externe 5 peut être réalisée par exemple en acier, en aluminium ou en matière plastique. Lorsque l'armature externe 5 est réalisée par moulage de matière plastique, son rôle est essentiellement d'assurer l'étanchéité des poches 13 et 14.

La partie cylindrique 20 entoure étroitement la paroi tubulaire 6 de la cage 3, une mince épaisseur de corps en élastomère 4 étant intercalée entre les deux. La partie cylindrique 20 se poursuit, vers la partie inférieure du support 1, c'est-à-dire du côté de l'extrémité axiale 8, par un rebord 23. Ce rebord 23 s'étend radialement, à partir de la partie cylindrique 20, vers l'axe X. Le corps en élastomère 4 intercalé entre l'extrémité axiale 8 de la paroi tubulaire 6 et ce rebord 23 constitue un joint d'étanchéité axiale.

La partie cylindrique 20 obture les fenêtres 10 et 11 pour fermer les poches 13 et 14, le corps en élastomère 4 formant un joint d'étanchéité autour de ces fenêtres 10 et 11.

La partie cylindrique 20 se poursuit vers l'extrémité supérieure du support 1, c'est-à-dire du côté de l'extrémité axiale 9 de la paroi tubulaire 6, par l'épaulement 21. Lorsque l'armature externe 5 est réalisée en acier ou en aluminium, l'épaulement 21 est réalisé par emboutissage de l'armature externe 5 ou encore lors d'un moulage. Lorsque l'armature externe 5 est réalisée par moulage d'une matière plastique, l'épaulement 21 est formé lors de ce moulage. L'épaulement 21 s'étend radialement vers l'extérieur du support 1.

L'épaulement 21 délimite un canal 24 avec la partie supérieure de la paroi tubulaire 6 située à proximité de l'extrémité axiale 9, et la collerette 7. Ce canal 24 est étroit et relie les poches 13 et 14 en s'étendant selon un arc de cercle centré sur l'axe X. La liaison entre chacune des poches 13 et 14 et le canal 24 est effectuée à travers les fenêtres 10 et 11 et par des passages coudés formés dans l'armature externe 5 (non visibles sur les plans de coupe représentés).

Les poches 13, 14 et le canal 24 sont remplis d'un liquide d'amortissement L. Ce liquide se déplace d'une poche à l'autre via le canal 24. La poche 13 est apte à se déformer, grâce à la souplesse de la paroi 16, lorsque l'armature interne 2 est déplacée par rapport à la cage 3.

L'épaulement 21 se poursuit radialement vers l'extérieur du support 1, par le collet 22. Le collet 22 comporte quatre cheminées 25 ou sertissures, en coïncidence des orifices de sertissage 19. La paroi constitutive de chaque cheminée 25 est rabattue sur la fraisure de l'orifice de sertissage 19 correspondant. L'armature externe 5 est ainsi retenue sur la platine 17. Chaque cheminée 25 est conformée de manière à ne pas dépasser sur la face supérieure de la platine 17, après sertissage.

La fabrication du support s'effectue en une seule opération au cours de laquelle on emboîte par sa face supérieure (du côté de l'épaulement 21) en force l'armature interne 2 et la cage 3 dans l'armature externe 5 et on rabat les cheminées 25 dans les orifices de sertissage 19 correspondants. Lorsque l'armature externe 5 est en matière plastique, elle est avantageusement maintenue par clipsage sur la platine 17.

Une partie du corps en élastomère 4 est comprimée entre la collerette 7 et le collet 22, formant ainsi un autre joint d'étanchéité axiale.

De nombreuses variantes au mode de réalisation du support 1 selon l'invention présenté ci-dessus peuvent être envisagées. Ainsi, par exemple une fraisure peut être formée sur le collet 22 plutôt que sur la platine 17, tandis que la cheminée 25 est formée sur la platine 17, inversant ainsi le sens de sertissage par rapport à celui présenté ci-dessus. De même, un sertissage du collet 22 sur les bords de la platine 17 peut être prévu en complément ou en remplacement du sertissage dans les orifices de sertissage 19 décrits ci-dessus.

## Revendications

1. Support antivibratoire hydraulique comprenant:
- une armature interne (2) rigide s'étendant longitudinalement le long d'un axe (X),
- une cage (3) rigide comportant une paroi tubulaire (6) et une collerette (7), la paroi tubulaire (6) s'étendant entre deux extrémités axiales (8,9) et entourant l'armature interne (2), et la collerette (7) s'étendant radialement vers l'extérieur, à partir de la paroi tubulaire (6), à l'une (9) des extrémités axiales (8,9) de celle-ci,
- une armature externe (5) cylindrique s'étendant également entre deux extrémités axiales, dans laquelle est logée la cage (3) et comportant, à l'une de ses extrémités axiales, un épaulement (21) et un collet (22), l'épaulement (21) délimitant, avec la collerette (7) et la paroi tubulaire (6), un canal (24) étroit s'étendant selon un arc de cercle centré sur l'axe (X), et le collet (22) s'étendant à partir de l'épaulement (21) perpendiculairement à l'axe (X),
- un corps en élastomère (4), relié à l'armature interne (2) et à la cage (3), tapissant au moins une partie de la surface de la paroi tubulaire (6) et de la collerette (7) en regard de l'armature externe (5), ce corps en élastomère (4) étant conformé pour fermer le canal (24) de manière étanche et pour former avec l'armature externe (5) au moins deux poches (13,14) communiquant entre elles par le canal (24), l'ensemble des poches (13,14) et du canal (24) étant rempli d'un liquide amortisseur (L) et l'une des poches (13,14) étant déformable lorsque l'armature interne (2) et la cage (3) subissent un déplacement radial l'une par rapport à l'autre, et
- une platine (17), solidaire d'au moins un élément choisi parmi la cage (3) et l'armature externe (5), s'étendant perpendiculairement à l'axe (X) et comportant des moyens de fixation (18) du support (1) sur une pièce extérieure (26) à ce support (1),
**caractérisé par le fait :**
- **que** le collet (22) s'étend radialement vers l'extérieur à partir de l'épaulement (21) et comporte au moins une portion de surface en regard de la collerette (7), avec une épaisseur de corps en élastomère (4) intercalée entre le collet (22) et la collerette (7),
- **que** le collet (22) est directement fixé à la collerette (7) par sertissage,
- **et qu'**au moins l'un des éléments choisis parmi le collet (22) et la collerette (7) constitue la platine (17).

2. Support selon la revendication 1, dans lequel l'un des éléments parmi le collet (22) et la collerette (7) comporte au moins un orifice de sertissage (19) avec une fraisure formant une retenue pour une sertissure (25) venue de matière avec l'autre de ces éléments.

3. Support selon l'une des revendications précédentes dans lequel la platine (17) est constituée par la collerette (7) et s'étend dans un plan sensiblement perpendiculaire à l'axe (X).

4. Support selon l'une des revendications précédentes, dans lequel l'armature externe (5) est réalisée dans une matière choisie parmi l'aluminium, l'acier et une matière plastique.

5. Support selon l'une des revendications précédentes, dans lequel l'épaulement (21) est réalisé par emboutissage de l'armature externe (5).

6. Support selon l'une des revendications 1 à 4, dans lequel l'épaulement (21) est réalisé par moulage de l'armature externe (5).

## Patentansprüche

1. Hydraulisch gedämpftes Lager mit:
- einer inneren steifen Armierung (2), die sich entlang der Länge einer Achse (X) erstreckt,
- einem steifen Käfig (3), der eine röhrenförmige Wand (6) und einen Kragen (7) aufweist, wobei sich die röhrenförmige Wand (6) zwischen zwei axialen Enden (8,9) erstreckt und die innere Armierung (2) umgibt und wobei sich der Kragen (7) an einem (9) der axialen Enden (8,9) der röhrenförmigen Wand (6) ausgehend von der röhrenförmigen Wand radial nach außen erstreckt,
- einer sich ebenfalls zwischen zwei axialen Enden erstrekkenden äußeren zylindrischen Armierung (5), in welcher der Käfig (3) untergebracht ist und welche an einem ihrer axialen Enden eine Schulter (21) und einen Flansch (22) aufweist, wobei die Schulter (21) mit dem Kragen (7) und der röhrenförmigen Wand (6) einen schmalen Kanal (24) begrenzt, der sich entlang eines auf der Achse (X) zentrierten Kreisbogens erstreckt, und wobei sich der Flansch (22) ausgehend von der Schulter (21) senkrecht zur Achse (X) erstreckt,
- einem Körper aus Elastomer (4), der mit der inneren Armierung (2) und dem Käfig (3) verbunden ist, mindestens einen Teil der der äußeren Armierung (5) zugekehrten Oberfläche der röhrenförmigen Wand (6) und des Kragens (7) überzieht, wobei dieser Körper aus Elastomer (4) angepaßt ist, um den Kanal dicht zu verschließen und um mit der äußeren Armierung (5) mindestens zwei Taschen (13,14) zu bilden, die über den Kanal (24) miteinander verbunden sind, wobei die Anordnung aus Taschen (13,14) und Kanal (24) mit einer Dämpfungsflüssigkeit (L) gefüllt ist und eine der Taschen (13,14) verformbar ist, wenn die innere Armierung (2) und der Käfig (3) radial zueinander verschoben werden, und
- einer Platte (17), die mit mindestens einem Element, ausgewählt unter dem Käfig (3) oder der äußeren Armierung (5), verbunden ist, sich senkrecht zur Achse (X) erstreckt und eine Einrichtung (18) zum Befestigen des Lagers (1) an einem Teil (26) außerhalb dieses Lagers aufweist,
**dadurch gekennzeichnet,**
- **daß** sich der Flansch (22) ausgehend von der Schulter (21) nach außen erstreckt und mindestens einen dem Kragen (7) zugekehrten Oberflächenabschnitt mit einer zwischen dem Flansch (22) und dem Kragen (7) eingefügten Dicke des Körpers aus Elastomer aufweist,
- **daß** der Flansch (22) mittels Falzung direkt an dem Kragen (7) befestigt ist, und
- **daß** mindestens eines der Elemente, ausgewählt unter Flansch (22) und Kragen (7), die Platte (17) bildet.

2. Lager nach Anspruch 1, in welchem eines von den Elementen Flansch (22) und Kragen (7) mindestens eine Falzöffnung (19) mit einer Aussparung aufweist, die einen Halt für einen Falz (25) bildet, der mit dem anderen dieser Elemente einstükkig ist.

3. Lager nach einem der vorstehenden Ansprüche, in welchem die Platte (17) von dem Kragen (7) gebildet wird und sich in einer zur Achse (X) im wesentlichen senkrechten Ebene erstreckt.

4. Lager nach einem der vorstehenden Ansprüche, in welchem die äußere Armierung (5) in einem Material ausgeführt ist, das unter Aluminium, Stahl und Kunststoff ausgewählt ist.

5. Lager nach einem der vorstehenden Ansprüche, in welchem die Schulter (21) durch Tiefziehen der äußeren Armierung (5) hergestellt ist.

6. Lager nach einem der Ansprüche 1 bis 4, in welchem die Schulter (21) durch einen Formprozeß der äußeren Armierung (5) hergestellt ist.

## Claims

1. A hydraulic antivibration mounting comprising:
a rigid inner strength member (2) extending longitudinally along an axis (X)
a rigid cage (3) comprising a tubular wall (6) and a flange (7), the tubular wall (6) extending between two axial ends (8,9) and surrounding the inner strength member (2) and the flange (7) extending radially outwards from the tubular wall (6) at one (9) of its axial ends (8,9);
a cylindrical outer strength member (5) extending likewise between two axial ends, the cage being received therein and the outer strength member having a shoulder (21) and a collar (22) at one of its axial ends, the shoulder (21) cooperating with the flange (22) and the tubular wall (6) of the cage to define a narrow channel (24) extending around a circular arc centered on the axis (X) and the collar (22) extending from the shoulder (21) perpendicularly to the axis (X);
an elastomer body (4) connected to the inner strength member (2) and to the cage (3) covering at least a fraction of the surface of the tubular wall (6) and of the flange (7) of the cage (3) facing the outer strength member (5), said elastomer body (4) being shaped to close the channel (24) in leaktight manner and to co-operate with the outer strength member (5) to form at least two pockets (13, 14) that communicate with each via the channel (24), the two pockets and the channel (24) being filled with a damping liquid (L), and one of the pockets being deformable when the inner strength member (2) and the cage (3) are subjected to radial displacement relative to each other; and
a plate (17) secured to at least one element selected from the cage (3) and the outer strength member (5), the plate (17) extending perpendicularly to the axis (X) and including fixing means for fixing the mounting to a part (26) external to the mounting (1),
wherein:
the collar (22) extends radially outwards from the shoulder (21) and includes at least one surface portion facing the flange (7) with a thickness of the elastomer body (4) being interposed between the collar (22) and the flange (7);
the collar (22) is fixed directly to the flange (7) by crimping;
and at least one of the elements selected from the collar (22) and the flange (7) constitutes the plate (17).

2. A mounting according to claim 1, in which one of the elements selected from the collar (22) and the flange (7) has at least one crimping orifice (19) with a countersunk hole to form means for retaining a crimping bead (25) formed out of the same material as the other one of said elements.

3. A mounting according to claim 1 or 2, in which the plate (17) is constituted by the flange (7) and extends in a plane substantially perpendicular to the axis (X).

4. A mounting according to any one of the preceeding claims, in which the outer strength member (5) is made of a material selected from: aluminium, steel, and a plastics material

5. A mounting according to any one of the preceeding claims, in which the shoulder (21) is made by stamping the outer strength member (5).

6. A mounting according to any one of claims 1 to 4, in which the shoulder (21) is made by molding the outer strength member (5).
